Europäisches Patentamt

European Patent Office

Office européen des brevets

(11) Publication number: **0 127 218**
**B1**

## (12) EUROPEAN PATENT SPECIFICATION

(45) Date of publication of patent specification: **02.09.87**

(21) Application number: **84200604.1**

(22) Date of filing: **02.05.84**

(51) Int. Cl.⁴: **A 47 F 1/08,** B 65 G 1/06,
B 65 D 21/02

(54) **A device for the ejection of boxes through the exit of a container and a box adapted for use in such a device.**

(30) Priority: **03.05.83 SE 8302508**

(43) Date of publication of application:
**05.12.84 Bulletin 84/49**

(45) Publication of the grant of the patent:
**02.09.87 Bulletin 87/36**

(84) Designated Contracting States:
**DE FR GB IT SE**

(56) References cited:
**DE-A-1 902 941
FR-A-2 123 054
GB-A-1 079 167
GB-A-1 111 015
US-A-3 424 334**

(73) Proprietor: **Philips Norden AB
Tegeluddsvägen 1
S-11584 Stockholm (SE)**
(84) **SE**
(73) Proprietor: **N.V. Philips' Gloeilampenfabrieken
Groenewoudseweg 1
NL-5621 BA Eindhoven (NL)**
(84) **DE FR GB IT**

(72) Inventor: **Andersson, Nils Anders Torbjörn
c/o INT. OCTROOIBUREAU B.V. Prof. Holstlaan 6
NL-5656 AA Eindhoven (NL)**
Inventor: **Lindgren, Bo Sven
c/o INT. OCTROOIBUREAU B.V. Prof. Holstlaan 6
NL-5656 AA Eindhoven (NL)**

(74) Representative: **Cuppens, Hubertus Martinus
Maria et al
INTERNATIONAAL OCTROOIBUREAU B.V. Prof.
Holstlaan 6
NL-5656 AA Eindhoven (NL)**

Courier Press, Leamington Spa, England.

## Description

The invention relates to a device for separating boxes from a stack of boxes which is arranged to be slidable along a guiding member, said device being provided with a retaining and transporting mechanism comprising rotating gear means which cooperate with translating gear engaging means on each of said boxes.

In a known device of the above kind (from DE—A 1.902.941) the rotating gear means of the retaining and translating mechanism comprise two circumferentially offset flange-shaped circular box supporting sections of which one section separates an end box from a stack of boxes whilst the other section retains the remaining boxes of the stack. The boxes are kept together in the stack by gravity forces and friction forces. In order to remove a separated end box the stack must stay in a vertical position. Ejection of the end box with a starting velocity which considerably differs from zero velocity is not envisaged in the known device and would lead to a different structure as is shown.

It is an object of the invention to provide a device for separating boxes from a stack of boxes which permits separation and ejection in all positions of the device with respect to the direction of the force of gravity.

This object of the invention is obtained in that said guiding member is a container wherein the stack of boxes is slidable in a direction perpendicular to the rotation axis of said rotating gear means, said boxes being coupled to each other by flexible snap-connection means on each box during transport up to said rotating gear means, said rotating gear means uncoupling an end box at one end of the stack from the adjacent box in the stack by releasing the respective flexible snap-connection means and subsequently ejecting the uncoupled box through an exit located adjacent to said rotating gear means of the container, whilst keeping the remaining boxes connected to each other by cooperating with said gear engaging means.

It has to be noted that an apparatus for dispensing food receptacles is known from GB—A—1.079.167. A relatively complicated reciprocating disassembling member and a separate hold-down member are used to separate and remove an end receptacle. The receptacles in a stack may be coupled by bands which are snapped into or onto cooperating formations on the receptacle.

A further object of the invention is to provide a device with a relatively simple shape of the rotating gear means. Such a device is characterized in that said rotating gear means is provided with a tooth of which a leading part ejects said uncoupled end box whilst a tailing part of the same tooth simultaneously retains the stack of said remaining coupled boxes.

An additional object of the invention is to provide a device wherein the boxes are protected against damage during transport in the container.

Said object of the invention is accomplished in that said retaining and transporting mechanism comprises a piston which is slidable in said container and which is provided with a first and a second plate of which said first leading plate is biased against the stack of boxes by means of a spring arranged between said first leading plate and said second tailing plate.

Still a further object of the invention is to provide a device with a relatively simple drive mechanism for both the rotating gear means and the piston. This object of the invention is obtained in that said rotating gear means is rotated and said second tailing plate of the displacer is translated by one and the same cable drive mechanism, the circumferential velocity of said rotating gear means at the location of cooperation with said translating gear engaging means of said end box being equal to the translation velocity of said tailing plate of the piston.

A box according to the prior art portion of Claim 1 is known from DE—A—1.902.941.

Still a further object of the invention is to provide a box with a particular shape which is adapted to the first gear means of the transport mechanism.

This object of the invention is obtained by a box as characterized in Claim 5.

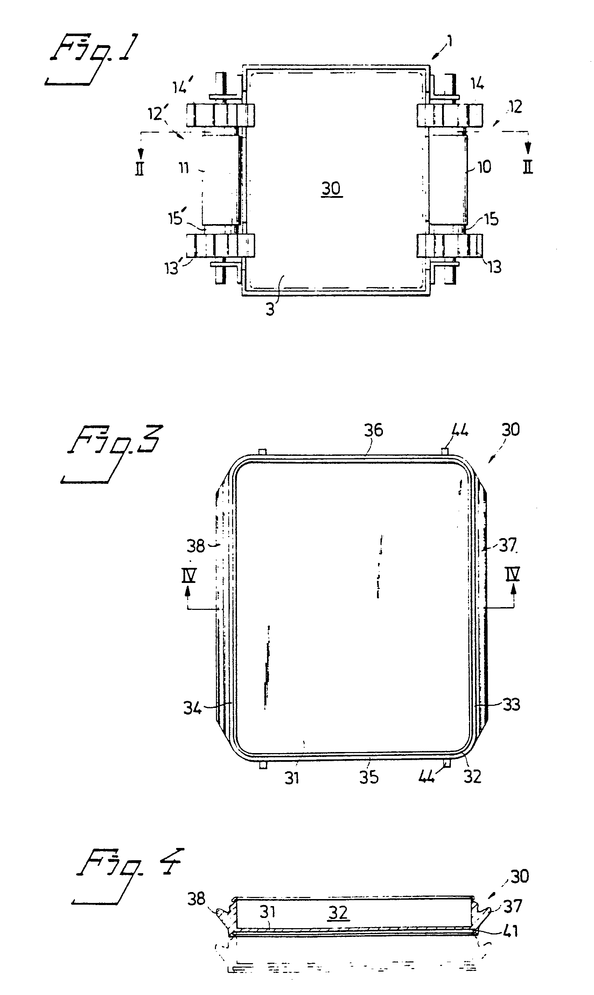

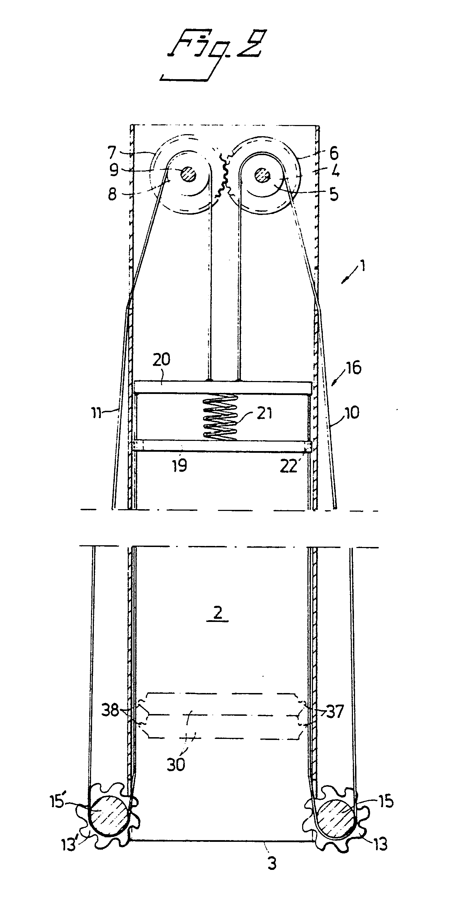

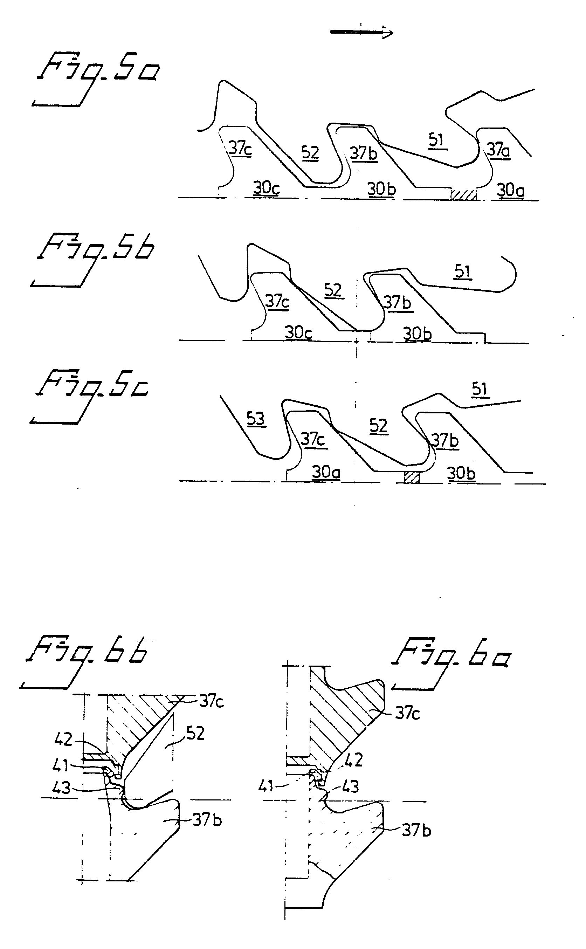

The invention will be described in more detail with reference to the accompanying drawings, in which Fig. 1 shows a frontview of the ejection device, Fig. 2 shows a longitudinal cross-section of the ejection device along the line II—II in Fig. 1, Fig. 3 shows a box adapted to the ejection device according to Figures 1 and 2, Fig. 4 shows a cross-section through the box according to Fig. 3 along the line IV—IV, Fig. 5a—c show cooperation between first and second gear means in different positions during the separation and ejection phase, and Fig. 6a—b show the snapping means connection two adjacent boxes, Fig. 6a showing the situation before separation of adjacent boxes corresponding to Fig. 5a and Fig. 6b showing the situation during separation of adjacent boxes according to figures 5b and 5c.

In Figures 1 and 2 an ejection device 1 for dispensing chaff is shown which comprises a container 2 for chaff boxes 30 and a drive mechanism 4—22 for driving a train of boxes to an exit 3 of the container 2 and for the separation and feeding out of boxes 30 at the exit 3. For transporting the slidable train of boxes 30 and separating one by one the boxes 30, a driving motor (not shown) drives a first shaft 4 on which a belt pulley 5 and a gear wheel 6 are fixedly arranged. The gear wheel 6 cooperates with a similar gear wheel 7 which together with a belt pulley 8 is fixedly arranged on a second shaft 9 arranged parallel to the first shaft 4. The shafts 4 and 9 are arranged adjacent to the end of the container situated farest away from the exit 3 of the container. Adjacent to exit 3 the first gear means 12 and 12′ are arranged opposite to each other. Both gear means 12 and 12′ comprise a pair of gear wheels 13, 14 and 13′, 14′ respectively (fig. 1), each pair being rigidly arranged on parallel common shafts 15 and 15' respectively. Eventually, the gear wheels 13, 14 and the common shaft 15 may be formed as one piece as well as the gear wheels 13', 14' and the common shaft 15'. Driving belts 10 and 11 respectively connect the two gear units 12 and 12'. The ends of the driving belts 10 and 11 are attached to a compressible piston 16 which is slidably arranged in the container 2. The piston 16 comprises two parallel plates 19 and 20 with a spring 21 therebetween. In this case the ends of the belts 10 and 11 are fixed to the plate 20 situated farest away from the exit 3 of the container 2. Eventually, the front plate 19 may be provided with recesses 22 in order to admit the passage of the driving belts 10 and 11. In fig. 2 the position of two chaff boxes 30 has been indicated with dash-dotted lines. In reality, however, the complete container space betwen the piston 16 and the exit 3 is filled up with chaff boxes 30.

Figures 3 and 4 show a chaff box 30 adapted to the described transport mechanism. The box 30 is limited by a bottom plate 31 and side walls 32. Side walls 32 are constituted by two oppositely arranged straight parallel side walls 33 and 34 and two side walls 35 and 36 connecting said parallel side walls 33 and 34.

The box 30 is closed by a bottom plate 31 of an adjacent box. The adjacent box is indicated with dash-dotted lines in Fig. 4. Chaffs of several lengths adapted to different frequency ranges are kept in the boxes. The chaffs may be of, for example, foil or glassfiber type.

The opposite parallel side walls 33 and 34 are provided with second gear means 37 and 38. In the shown embodiment the second gear means 37 and 38 consist of an oblong projecting part formed in one piece with the side walls 33 and 34. The projecting parts 37 and 38 are somewhat inclined. The described second gear means 37 and 38 may be constituted by more than one gear element. For example a separate gear element may be provided for each of the first gear means 13, 14, 13', 14' arranged adjacent to the exit 3 of the container 2.

In order to obtain a reliable coupling of adjacent boxes the side walls 32 may be tapered close to the boxes in front of and behind of it in such a way that the boxes can be pushed into each other. As an alternative, the side walls 32 may be given a somewhat conical shape in order to obtain a reliable coupling between the boxes. Moreover, the boxes 30 are provided with flexible snapping means in order to connect adjacent boxes to each other. A snapping means comprises, as is most apparent from Figures 6 and 6b, a flexible projection 41 formed in the side walls 32 of a box and a recess 42 likewise formed in the side walls 32 of a box. In an assembled position a projection 41 in one box 30 engages with a recess 42 in an adjacent box 30. A further flexible projection 43 may be arranged adjacent to the projection 41. This projection 41 constitutes a point of action for activating the snapping means.

Furthermore ridges 44 may be provided on the outside of the side walls 32 (Fig. 3). These ridges cause a reduction of the friction between a train of attached boxes 30 and the walls of the container 2.

The operation of the ejection device will now be described in more detail with reference to Figures 1, 2, 5 and 6.

The container 2 is filled by rotating the gear wheels 12 and 12' so that a train of attached chaff boxes 30 can be inserted in the container 2 through exit 3 and slided against the piston 16. The gear wheels 12 and 12' are then rotated back so that they engage with the second gear means on the box being situated closest to the container exit 3. The compression piston 16 biases the train of boxes in the direction towards the exit 3.

Ejection of chaff boxes is initiated by starting a drive motor which rotates the shaft 4 supporting the belt pulley 5 and the gear wheel 6. The gear wheel 6 rotates the gear wheel 7 and the belt pulley 8. The belt pulley 5 drives the belt 10 which via the shaft 15 rotates the gear wheels 13 and 14 of first gear means 12. The belt pulley 8 in the same way drives the belt 11 which via a shaft 15' rotates the gear wheels 13' and 14' of first gear means 12'. For the guiding of the driving belts the drive mechanism may be supplemented with guide rollers. For example, guide rollers which serve to guide the belts towards the outer walls of the container may be arranged on the outside of the container close to the first gear means. The gear wheels 13, 14, 13', 14' engage with the corresponding second gear means 37, 38 of the chaff boxes and ensure that the boxes 30 are ejected one by one. The compressible piston 16 exerts a force on the train of boxes in the direction towards the container exit and ensures by means of its compressibility that the boxes, the gear means 12, 12', the belts 10, 11 and even the further parts of the drive mechanism are not subjected to injurious forces.

The cooperation between the first gear means of the transport mechanism and the second gear means of the boxes will now be described in more detail with reference to Figures 5 and 6.

Fig. 5a shows a position in which a tooth 52 of a gear wheel 13, 14, 13', 14' just has entered into the space between the gear means 37b and 37c, while the tooth 51 on one hand gives the box 30a situated closest to the exit 3 a final push out of the container 2 and on the other hand prevents the box 30b from leaving the container 2. During the counter-clockwise rotation of the gear wheel to the position shown in Fig. 5b the chaff boxes 30b and 30c are moved closer to the exit and the tooth 52 opens the snapping means by pressing aside a projection 43. The snapping means are shown in more detail in Figures 6a and 6b, Fig. 6b showing a position which corresponds to that of Fig. 5b.

When in the position shown in Fig. 5b the tooth 52 begins to engage with both the gear means 37b in front of and the gear means 37c behind the tooth.

During the counter-clockwise rotation of the gear wheels from the position shown in Fig. 5b to the position shown in Fig. 5c the tooth 52 tends to increase the distance between the gear means 37b and 37c, so that the box 30b situated closest to the exit 3 starts to separate from the train of chaff boxes situated behind it. At the same time the tooth 53 ensures that the train of chaff boxes is moved towards the exit.

During the continued counter-clockwise rotation of the gear wheels from the position shown in Fig. 5c the tooth 52 moves nearer to the position of the tooth 51 in Fig. 5a. The box 30b situated closest to the exit is completely released from the boxes lying behind during the last mentioned rotation and is given a push out of the container by the tooth 52.

The ejection of further boxes is performed in the same way as described above for the box 30b.

In the shown embodiment the exit is provided with a total of four gear wheels 13, 14, 13', 14'. However, it is possible to increase or decrease the number of gear wheels. For example, solutions with only one or two gear wheels are possible.

The driving of the gear wheels 13, 14, 13', 14' at the exit 3 of the container may be performed step by step or continuously during a limited period of time.

In the described embodiment driving belts are used for driving of the gear wheels at the exit 3 of the container. These belts may be perforated and cooperate with belt pulleys provided with teeth. Alternatively, the belt driving may be replaced by a wire or chain driving.

Furthermore, it is possible to replace the described piston transport by other constructions. In one simple variant the piston is omitted and the gear wheels 13, 13' serve as well for the transport as for the ejection. The driving motor may be located in direct connection with the gear means 12, 12' which may be coupled via further gear wheels.

In addition it is to be noted that the described principle for ejection of boxes from a container may be used also in devices other than chaff ejection devices. The principle may be used for example in vending machines for food articles or assembly lines for sequentially feeding out products from the line.

## Claims

1. A device for separating boxes from a stack of boxes (30) which is arranged to be slidable along a guiding member (2), said device being provided with a retaining and transporting mechanism comprising rotating gear means (12, 12') which cooperate with translating gear engaging means (37, 38) on each of said boxes (30), characterized in that said guiding member is a container (2) wherein the stack of boxes (30) is slidable in a direction perpendicular to the rotation axis (15, 15') of said rotating gear means (12, 12'), said boxes (30) being coupled to each other by flexible snap-connection means (41, 42) on each box (30) during transport up to said rotating gear means (12, 12'), said rotating gear means (12, 12') uncoupling an end box at one end of the stack from the adjacent box in the stack by releasing the respective flexible snap-connection means (41, 42) and subsequently ejecting the uncoupled box (30a) through an exit (3) located adjacent to said rotating gear means (12, 12') of the container, whilst keeping the remaining boxes (30, 30c) connected to each other by cooperating with said gear engaging means (37, 38).

2. A device as claimed in claim 1, characterized in that said rotating gear means (12, 12') is provided with a tooth (51) of which a leading part ejects said uncoupled end box (30a) whilst a tailing part of the same tooth simultaneoulsy retains the stack of said remaining coupled boxes (30b, 30c).

3. A device as claimed in claim 1, characterized in that said retaining and transporting mechanism comprises a piston (16) which is slidable in said container and which is provided with a first and a second plate (19, 20) of which said first leading plate (19) is biased against the stack of boxes by means of a spring (21) arranged between said first leading plate (19) and said second tailing plate (20).

4. A device as claimed in claim 3, characterized in that said rotating gear means (12, 12') is rotated and said second tailing plate (20) of the piston (16) is translated by one and the same cable drive mechanism (4—11), the circumferential velocity of said rotating gear means (12, 12') at the location of cooperation with said translating gear engaging means (37, 38) of said box (30a) being equal to the translation velocity of said tailing plate (20) of the piston (16).

5. A box for use in a device according to Claim 1, said box (30) being stackable and comprising translating gear engaging means (31, 38) which are able to cooperate with rotating gear means (12, 12') of said device, characterized in that box (30) contains chaff and in that the box comprises flexible snap connection means (41, 42) by which different boxes can be coupled and uncoupled.

## Patentansprüche

1. Vorrichtung zum Lösen von Behältern aus einem Stapel dieser Behälter (30), der zum Verschieben entlang einer Führungseinrichtung (2) angeordnet ist, wobei die Vorrichtung mit einer Halte- und Transporteinrichtung mit drehbaren gezahnten Mitteln (12, 12') versehen ist, die mit verschiebbaren Zahneinrastmitteln (37, 38) auf jedem der Behälter (30) zusammenarbeiten, dadurch gekennzeichnet, dass die Führungseinrichtung ein Container (2) ist, in dem der Stapel Behälter (30) in einer senkrecht zur Drehungsachse (15, 15') der drehbaren gezahnten Mitteln (12, 12') verschiebbar ist, wobei die Behälter (30) miteinander durch flexible Einrastmittel (41, 42) auf jedem Behälter (30) bei ihrem Transport bis zu den gezahnten Mitteln (12, 12') verkoppelt sind, wobei die gezahnten Mittel (12, 12') einen letzten Behälter an einem Ende des Stapels vom folgenden Behälter im Stapel durch lösen der betreffenden flexiblen Einrastmittel (41, 42) befreit und anschliessend den freigemachte Behälter (30a) durch einen Ausgang (3) neben den gezahnten Mitteln (12, 12') des Containers ausgibt, wobei die übrigen Behälter (30b, 30c) miteinander durch Zusammenarbeit mit den Einrastmitteln (37, 38) verbunden bleiben.

2. Vorrichtung nach Anspruch 1, dadurch gekennzeichnet, dass die drehbarengezahnten Mittel (12, 12') mit einem Zahn (51) ausgerüstet sind, von dem eine Vorderkante den freigegebene "letzte" Behälter (30a) ausgibt, während ein rückwärtiger Teil dieses Zahns gleichzeitig den Stapel der restlichen verkoppelten Behälter (30b, 30c) festhält.

3. Vorrichtung nach Anspruch 1, dadurch gekennzeichnet, dass die Halte- und Transporteinrichtung einen Kolben (16) enthält, der im Container verschibbar und mit einer ersten und einer zweiten Platte (19, 20) ausgerüstet ist, von denen die erste oder Vorderplatte (19) unter Vorspannung einer Feder (21) zwischen der ersten oder Vorderplatte (19) und der zweiten oder Rückplatte (20) am Behälterstapel anliegt.

4. Vorrichtung nach Anspruch 3, dadurch gekennzeichnet, dass die drehbaren gezahnten Mittel (12, 12') gedreht werden und die zweite oder Rückplatte (20) des Kolbens (16) durch eine und dieselbe Kabelantriebseinrichtung (4—11) verschoben wird, wobei die Umfangsgeschwindigkeit der gezahnten Mittel (12, 12') an der Zusammenarbeitsstelle mit den beschriebbaren Zahneinrastmitteln (37, 38) des letzten Behälters (30a) gleich der Vorschubgeschwindigkeit der Rückplatte (20) des Kolbens (16) ist.

5. Behälter zum Gebrauch in einer Vorrichtung nach Anspruch 1, wobei diese Behälter (30) stapelbar ist und verschiebbare Zahneinrastmittel (37, 38) enthält, die mit drehbaren gezahnten Mitteln (12, 12') dieser Vorrichtung zusammenarbeiten können, dadurch gekennzeichnet, dass der Behälter (30) Düppel enthält und mit flexiblen Einrastmitteln (41, 42) ausgerüstet ist, mit deren Hilfe verschiedene Behälter miteinander verkoppelt und gelöst werden können.

**Revendications**

1. Dispositif pour séparer des récipients d'une pile de récipients (30) qui peut coulisser le long l'un élément de guidage (2), ce dispositif étant pourvu d'un méchanisme de retenue et de transport comprenant des éléments d'engrenages tournants (12, 12') qui coopèrent avec des éléments d'engrenages de translation (37, 38) sur chacun des récipients (30), caractérisé en ce que l'élément de guidage est un fût (2) dans lequel la pile de récipients (30) peut coulisser dans un sens perpendiculaire à l'axe de rotation (15, 15') des éléments d'engrenages tournants (12, 12'), les récipients (30) étant attachés l'un à l'autre par des moyens d'accrochage élastique flexibles (41, 42) sur chaque récipient (30) pendant le transport jusqu'aux éléments d'engrenages tournants (12, 12'), les éléments d'engrenages tournants (12, 12') détachant un récipient d'extrémité à une extrémité de la pile du récipient adjacent de la pile en libérant les moyens d'accrochage élastique flexibles correspondants (41, 42) et éjectant ensuite le récipient détaché (30) par un orifice de sortie (3) situé près des éléments d'engrenages tournants (12, 12') du fût tout en maintenant les récipients restants (30b, 30c) attachés l'un à l'autre par coopération avec les éléments d'engrenages (37, 38).

2. Dispositif suivant la revendication 1, caractérisé en ce que l'élément d'engrenage tournant (12, 12') est pourvu d'une dent (51) dont une partie antérieure éjecte le récipient d'extrémité détaché (30a), tandis qu'une partie postérieure de cette même dent retient simultanément la pile de récipients restant attachés l'un à l'autre (30b, 30c).

3. Dispositif suivant la revendication 1, caractérisé en ce que le mécanisme de retenue et de transport comprend un piston (16) qui peut coulisser dans le fût et qui est pourvu d'un premier et d'un second plateau (19, 20), le premier plateau antérieur (19) étant sollicité élastiquement contre la pile de récipients au moyen d'un ressort (21) disposé entre ce premier plateau antérieur (19) et le second plateau postérieur (20).

4. Dispositif suivant la revendication 3, caractérisé en ce que les éléments d'engrenages tournants (12, 12') sont entraînés en rotation et le second plateau postérieur (20) du piston (16) est déplacé par un seul et même mécanisme d'entraînement à câble (4, 11), la vitesse circonférentielle des éléments d'engrenages tournants (12, 12') à l'endroit de coopération avec les éléments d'engrenages de translation (37, 38) du récipient d'extrémité (30a) étant égale à la vitesse de translation du plateau postérieur (20) du piston (16).

5. Récipient à utiliser dans un dispositif suivant la revendication 1, ce récipients (30) étant empilable et comprenant des éléments d'engrenages de translation (37, 38) qui sont à même de coopérer avec les éléments d'engrenages tournants (12, 12') du dispositif, caractérisé en ce que le récipient (30) contient des bandelettes et comprend des moyens d'attache élastique flexibles (41, 42) par lesquels différents récipients peuvent être attachés et détachés.

Fig.1

Fig.3

Fig. 4

Fig. 2

**Fig. 5a**

37c  52  37b  51  37a

30c  30b  30a

**Fig. 5b**

37c  52  37b  51

30c  30b

**Fig. 5c**

53  37c  52  51  37b

30a  30b

**Fig. 6b**

37c
52
42
41
43
37b

**Fig. 6a**

37c
42
41  43
37b